(19) Europäisches Patentamt
European Patent Office
Office européen des brevets

(11) EP 0 567 649 B1

(12) **EUROPEAN PATENT SPECIFICATION**

(45) Date of publication and mention of the grant of the patent:
**18.06.1997 Bulletin 1997/25**

(21) Application number: **92916174.3**

(22) Date of filing: **24.07.1992**

(51) Int Cl.[6]: **C10M 171/00**

(86) International application number:
**PCT/JP92/00944**

(87) International publication number:
**WO 93/02166 (04.02.1993 Gazette 1993/04)**

(54) **ELECTROVISCOUS FLUID**

Elektroviskose Flüssigkeit

FLUIDE ELECTROVISQUEUX

(84) Designated Contracting States:
**DE FR GB**

(30) Priority: **24.07.1991 JP 184496/91**
**26.12.1991 JP 344922/91**
**26.12.1991 JP 344924/91**

(43) Date of publication of application:
**03.11.1993 Bulletin 1993/44**

(73) Proprietor: **Tonen Corporation**
**Tokyo 100 (JP)**

(72) Inventors:
- **TOMIZAWA, H., Tonen Corp. Corper. Research**
**3-1, Nishi-Tsurugaoka 1-chome Ohi-machi, (JP)**
- **KANBARA, M., Tonen Corp. Corp. Research**
**3-1, Nishi-Tsurugaoka 1-chome Ohi-machi, (JP)**
- **MIYAMOTO, T., Tonen Corp. Corp. Research**
**3-1, Nishi-Tsuruguaka 1-chome Ohi-machi, (JP)**

(74) Representative: **VOSSIUS & PARTNER**
**Postfach 86 07 67**
**81634 München (DE)**

(56) References cited:

| | |
|---|---|
| **EP-A- 0 291 338** | **EP-A- 0 395 359** |
| **EP-A- 0 478 034** | **WO-A-92/00469** |
| **GB-A- 2 199 336** | **JP-A- 2 503 326** |
| **JP-A-58 187 492** | **JP-A-62 241 995** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 567 649 B1

## Description

The present invention relates to an electroviscous fluid for electrically controlling vibration control machines and devices such as variable dampers, engine mounts, bearing dampers, clutches, valves, shock absorbers, precision machines, acoustic machines etc. and also for display elements.

Electroviscous fluids, in which the viscosity of the fluid changes when voltage is applied, have been known since many years. Early study on electroviscous fluids was concentrated on a system containing a liquid only, while electroviscous fluids of solid dispersion systems were developed by Winslow et al.

In such electroviscous fluids, solid particles, polarizing agents, etc, are dispersed in an electrically insulating fluid such as mineral oil, synthetic oil, etc., and it is necessary to uniformly disperse solid particles in the electrically insulating fluid to obtain the effect. Even when a dispersing agent is used, solid particles are likely to precipitate and this often leads to a decrease of the electroviscous effect and unstable properties and also to obstruction of various parts of machines. Also, there are problems such as friction wearing of machine parts and decrease of the electroviscous effect at a temperature lower than room temperature.

In the past, it has been reported that the electroviscous effect is obtained by azomethine liquid crystals under the presence of an electric field (Jpn. J. Appl. Phys. 17 (1978), p. 1525). The present inventors have found, during study on application of liquid crystals as electroviscous fluid for machines and devices such as variable dampers, engine mounts, bearing dampers, clutches, valves, shock absorbers etc., that azomethine type liquid crystals have a low electroviscous effect, and the effect is further decreased when it is in contact with atmospheric air, thus being not suitable for the use in machines and devices.

Electroviscous fluids comprising nematic liquid crystals have responsiveness of several to several tens of msec., and much higher responsiveness is required depending upon the machine system where the electroviscous fluid is used.

Ferroelectric liquid crystals are disclosed in the publication "JOURNAL DE PHYSIQUE-LETTRES"; vol.36, MARCH 1975, pages L-69 to L-71.

It is an object of the present invention to provide an electroviscous fluid, which has a high and stable electroviscous effect and a wide application temperature range and is to be used for vibration control machines and devices such as variable dampers, engine mounts, bearing dampers, clutches, valves, shock absorbers precision machines, acoustic machines, etc. and also for display elements.

The electroviscous fluid of the present invention is used for vibration control machines and devices such as variable dampers, engine mounts, bearing dampers, clutches, valves, shock absorbers, precision machines, acoustic machiness and also for display elements, and it contains a liquid crystal substance as principal component.

The present invention concerns an electroviscous fluid, comprising ferroelectric liquid crystals that have a spontaneous polarization of $3x10^{-9}$ $C/cm^2$ or more, with the proviso that the compound forming the ferroelectric liquid crystals does not have an azomethine bonding, and 0.01 to 10 weight % of an antioxidant and/or 0.001 to 10 weight % of a metal corrosion inhibitor, as disclosed in claim 1.

Further embodiements are disclosed in dependent claims 2 and 3.

Further, the electroviscous fluid of the present invention has liquid crystals or an electrically insulating fluid containing liquid crystals as dispersion medium and has solid particles as dispersoid.

In general, liquid crystals have anisotropy and, despite of the fact that they are liquid, they have crystalline properties. Because of their dipole moment, they are oriented in a certain direction under the presence of an electric field, and rheological change occurs due to particle arrangement. Thus, apparent viscosity is increased. That is, under the presence of an electric field, resistance occurs against the flow passing between the electrodes, and molecules are bound to each other by electrostatic attractive force. As the result, higher resistance occurs and this increases viscosity.

However, when an electroviscous fluid is used for electric control of machines and devices, it may be brought into contact with atmospheric air at pistons and the like, and it is used in a high electric field. If liquid crystals have an azomethine bonding, electroviscous effect is low and is decreased when used for long time. It was also found that liquid crystals having no azomethine bonding had a higher electroviscous effect and the effect was maintained even when they were brought into contact with atmospheric air, and they are suitable for the use in machines and devices.

Further, in the conventional type electroviscous fluid containing mineral oil, the electroviscous effect is extremely decreased at low temperature, while temperature dependency of viscosity of a liquid crystal substance is lower than that of mineral oil. Thus, when liquid crystals are used as electroviscous fluid, a good electroviscous effect is maintained even at low temperature, and the application temperature range can be widened.

In electroviscous fluids for machines and devices, there are problems in that, when a high electric field is applied and it is brought into contact with atmospheric air at pistons or the like, the electroviscous effect is decreased due to oxidation and deterioration of the liquid crystals and to the elution of electrode metal into the liquid crystals.
However, if an antioxidant and/or metal corrosion inhibitor is added to the electroviscous fluid, which contains liquid crystals as principal component, it is possible to prevent the decrease of the electroviscous effect.

Further, when the so-called p-type nematic liquid crystals having positive dielectric anisotropy are used an electroviscous fluid having higher thickening effect than with n-type nematic liquid crystals can be obtained. Although detailed reasons are not known, as the dielectric constant is higher in a direction parallel to the molecular axis, electrostatic attractive force becomes stronger than that of n-type nematic liquid crystal when an electric field is applied. As the result, it appears that higher resistance occurs against flow of fluid between the electrodes and this may lead to the increase of viscosity.

Ferroelectric liquid crystals are an electroviscous fluid having extremely high responsiveness. Ferroelectric liquid crystals have spontaneous polarizing property as high as $3 \times 10^{-9}$ C/cm$^2$ or more. Under the presence of an electric field, their driving force is very high, and response time can be shortened to less than 1 msec. This contributes to the implementation of very high responsive device.

Further, if an electroviscous fluid contains liquid crystals or an electrically insulating fluid containing liquid crystals as as dispersion medium and contains solid particles as dispersoid, thickening effect can be increased more compared with the electroviscous fluid of conventional type, in which solid particles are dispersed in the electrically insulating fluid without liquid crystals. The details of this mechanism are not known, but it seems that the electroviscous effect due to orientation of the liquid crystal itself is added to the electroviscous effect based on the electric double layer formed on the solid particles, and this may enhance the effect. In particular, in the electroviscous fluid using a conventional type electrically insulating fluid without containing liquid crystals, the electroviscous effect is extremely decreased at a temperature lower than room temperature. If liquid crystals are used, the electroviscous effect can be maintained even at low temperature, and the electroviscous fluid has a very wide application temperature range.

Examples a liquid crystal substance, which does not have azomethine bonding (-CH=N-bonding) in its structural formula, are expressed by the following formulae (1) and (2):

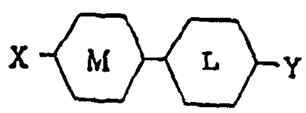 (1) 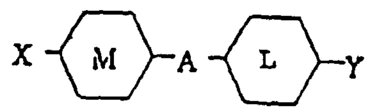 (2)

In the formulae (1) and (2), M and L represent:

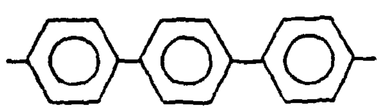, 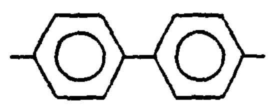, 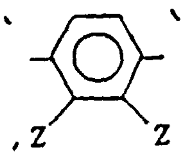, 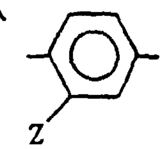,

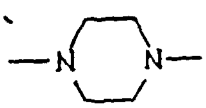, 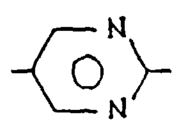, 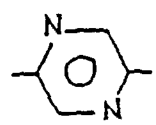, 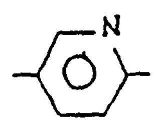,

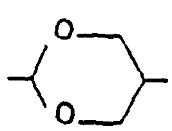, 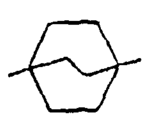, 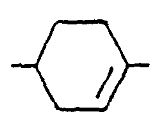, 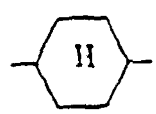, 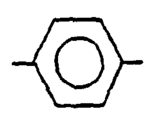

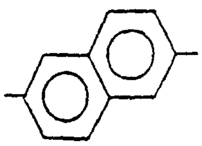,
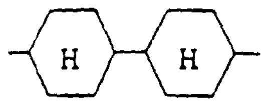,
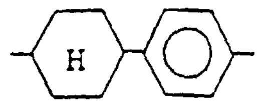

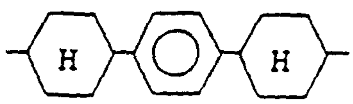,
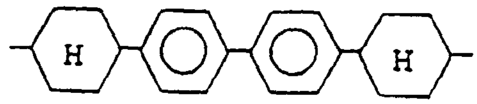,

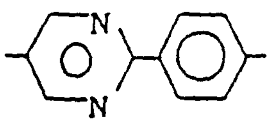,
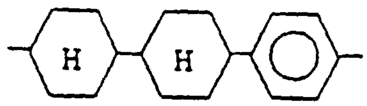,
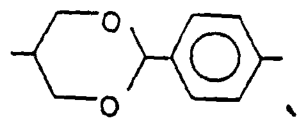,

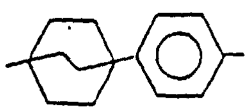,
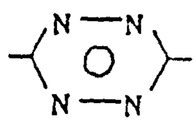,
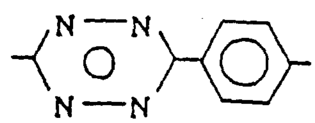,

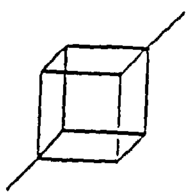,
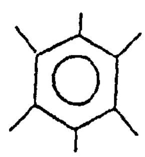,
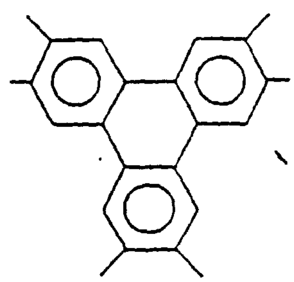,

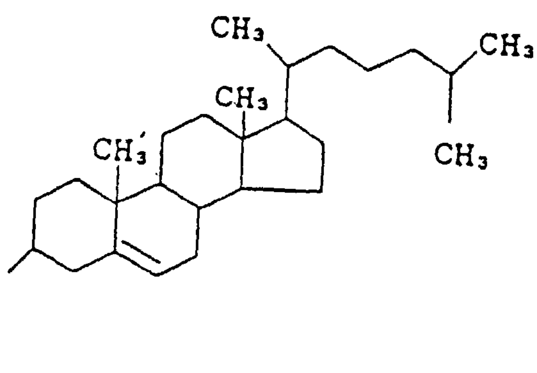

and A represents:

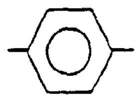 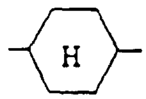 (trans) 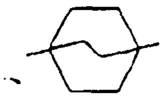

-CH=CH- (trans) ,

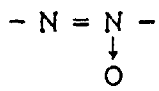 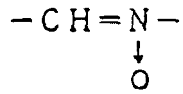

-C≡C-, -N=N- (trans) , -COO-, $-(CH_2)_n-$, $-CH_2O-$, -R'-, -COS-, -CH=C (CN)-, -CH=C(Cl)-, $-COCH_2-$, $-O-(CH_2)_2-O-$, -CH=CH-COO-, $-COO-C_6H_5-COO-$, X, Y: $-C_6H_5$, $-NHCOCH_3$, -CN, -OR, $-NO_2$, -F, -Cl, -Br, $-NR_2$, -R, H, -OCOR, -COOH, -CHO, -NCS, $-N_3$ , $-NH_2$, $-CH_2CH(Cl)CN$, $-C(CH_3)=NOH$, -COR, -C≡CH, $-CH_2COOH$, -NCO, -R'CN, -R'Cl, -R*, -ROR*, -OCOOR

In the above, R represents $C_nH_{2n+1}$, or

$C_2H_5-CH(CH_3)-CH_2-$,

$C_2H_5-CH(CH_3)-CH_2O-$,

$C_2H_5-CH(CH_3)-C_3H_6$ -,

R' is $C_nH_{2n}$,

R* is an optically active alkyl group,

Z and Z' are a cyano group, fluorine atom, chlorine atom, iodine atom, bromine atom, nitro group, and methyl group, and n in R and R' represents an integer of 1 to 20, and the number of carbon atoms in R* is the same as in R and R'.

As the liquid crystals given by the above formulae (1) and (2), there are the substances given by the following structural formulae:

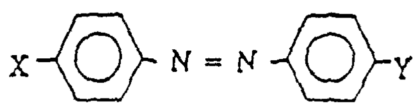 (3)

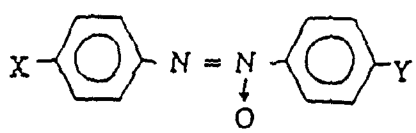 (4)

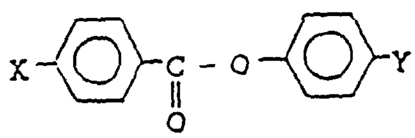 (5)

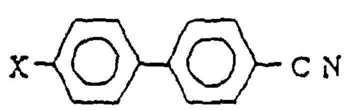 (6)

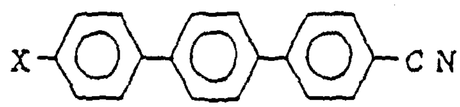

( 7 )

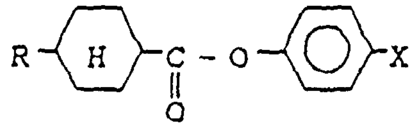

( 8 )

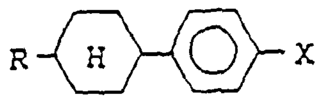

( 9 )

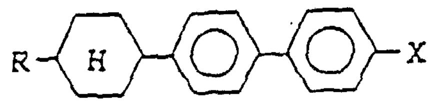

(10)

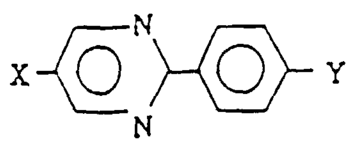

(11)

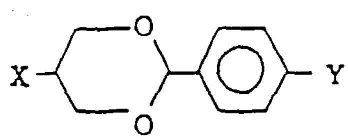

(12)

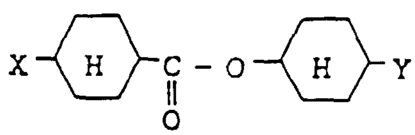

(13)

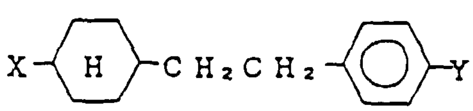

(14)

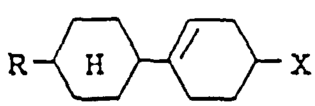

(15)

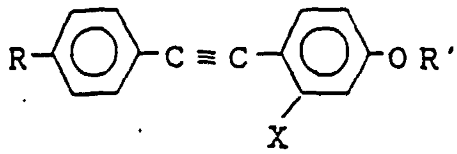

(16)

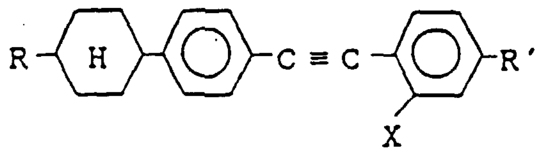

(17)

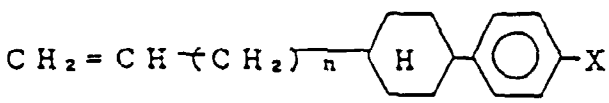

(18)

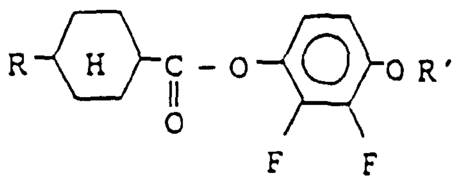

(19)

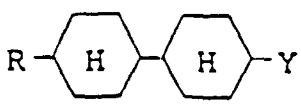

(20)

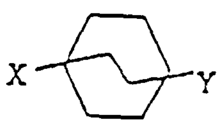

(21)

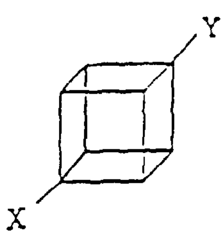

(22)

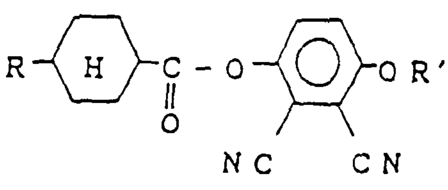

(23)

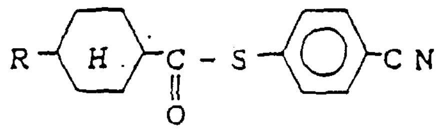

(24)

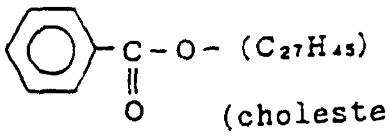

(cholesteric ring)

(25)

In the above, (3) is an azo type liquid crystal, (4) an azoxy type, (5) a phenyl benzoate type, (6) a cyanobiphenyl type, (7) a cyanoterphenyl type, (8) a cyclohexanecarboxylphenyl ester type, (9) a phenylcyclohexane type, (10) a biphenylcyclohexane type, (11) a phenylpyrimidine type, (12) a phenyldioxane type, (13) a cyclohexyl cyclohexanoate type, (14) a cyclohexylethane type, (15) a cyclohexane type, (16) an aklylalkoxytolan type, (17) an alkylcyclohexylalkoxytolan type, (18) an alkenyl type, (19) a 2,3-difluorophenylene type, (20) a cyclohexylcyclohexane type, (21) a bicyclooctane type, (22) a cubane type, (23) a dicyanohydroquinone type, (24) a cyanothiophenyl ester type, and (25) is a cholesteric type liquid crystal. In the above formulae, X, Y, R and R' are the same as X, Y, R and R' in the formulae (1) and (2).

The above liquid crystal substances may be used alone or in combination. Preferably, various types of liquid crystal substances are mixed and used to obtain higher electroviscous property.

These liquid crystal substances have fluidity at normal temperature and have excellent electroviscous effect. There is no problem of precipitation of solid particles as in the conventional type electroviscous fluid. Friction wearing to machine parts is low, and good electroviscous effect is obtained.

Among the liquid crystal substances, nematic liquid crystal compounds have a fluidity similar to liquids at normal temperature and give a high electroviscous effect when used alone or in combination, and no problem of precipitation occurs as in the conventional type electroviscous fluids containing solid particles. Anti-friction anti-wear property is also better than with normal type lubricating oil.

Among the nematic liquid crystals, those having the difference $\Delta\varepsilon$ between the dielectric constant $\varepsilon\parallel$ in a direction parallel to the molecular axis of liquid crystal and the dielectric constant $\varepsilon\perp$ in a direction perpendicular to the molecular axis of liquid crystal, i.e. those having

$$\Delta\varepsilon = (\varepsilon\parallel) - (\varepsilon\perp)$$

in a positive value, are called p-type nematic liquid crystals. This p-type nematic liquid crystals having a positive dielectric anisotropic property have an excellent electroviscous effect. Liquid crystals having $\Delta\varepsilon > 5$ have higher electroviscous effects.

Examples of ferroelectric liquid crystals are expressed by the following formulae. Preferably, the ferroelectric liquid crystals have a spontaneous polarization of $3 \times 10^{-9}$ C/cm$^2$ or more.

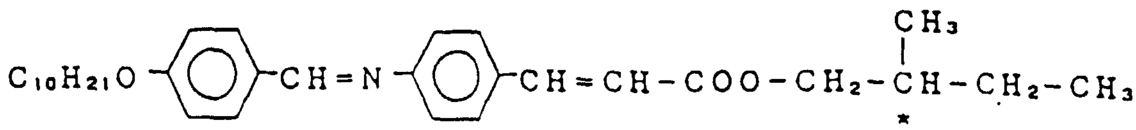

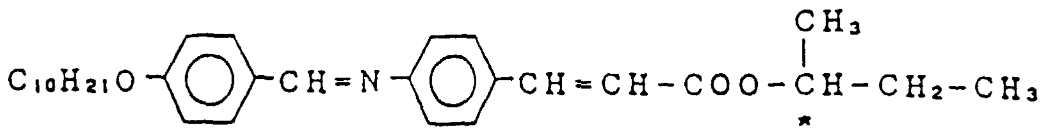

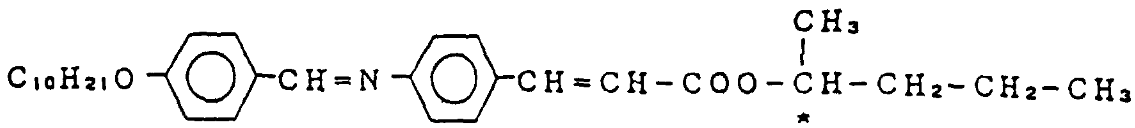

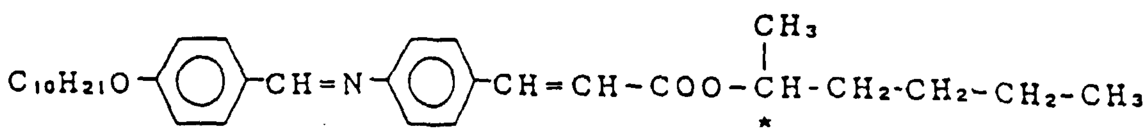

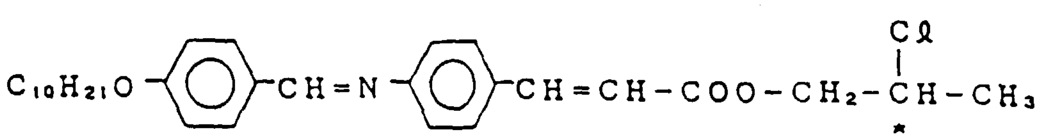

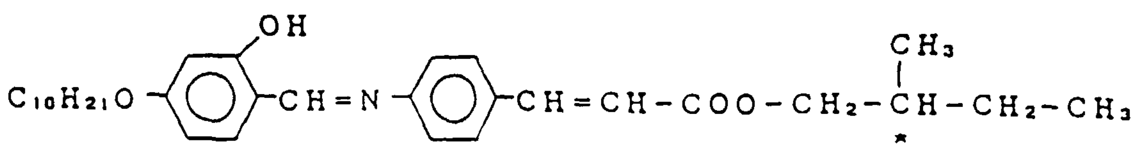

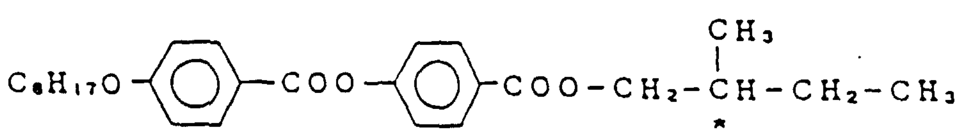

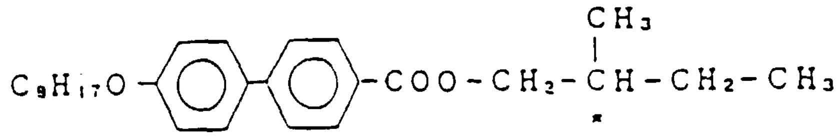

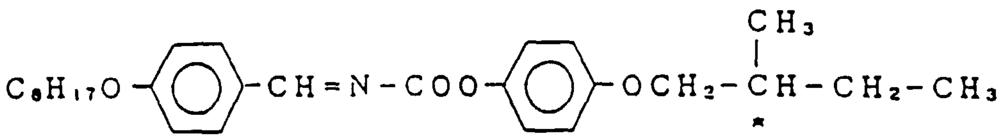

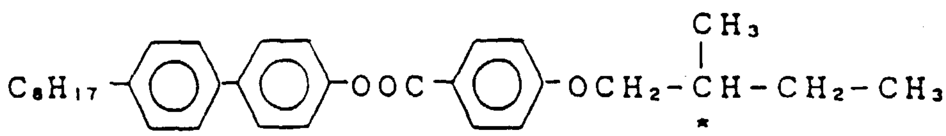

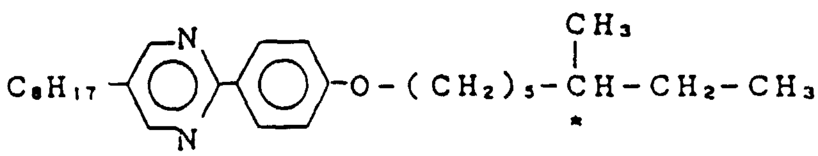

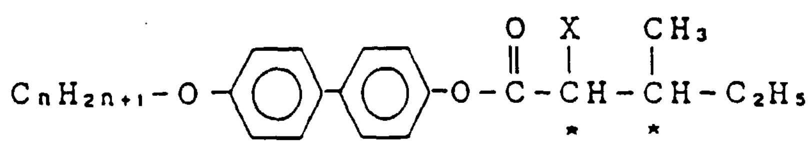

(Note) $\underset{\bullet}{C}$ represents an asymmetric carbon.

As (2S, 3S)-3-methyl-2-halopentanoic acid 4', 4''-alcoxybiphenyl ester, halogen may be chlorine (n=7), or halogen may be chlorine (n=8), or halogen may be chlorine (n=9).

Ferroelectric liquid crystals exhibit a fluidity similar to liquids at normal temperature when used alone or in combination and have excellent electroviscous effects. There is no problem of precipitation as in conventional type electroviscous fluids containing solid particles, and antifriction anti-wear property is also better than with normal type lubricating oil.

These liquid crystal substances are used alone or in combination. Preferably, various types of liquid crystal substances are mixed and used to have better liquid crystal property. Also, nematic liquid crystals as described above may be mixed in the ferroelectric liquid crystals.

Also, the electroviscous fluid may contain liquid crystals or an electrically insulating fluid containing the above liquid crystals as dispersion medium and solid particles as dispersoid.

There is no specific restriction to the electrically insulating fluid containing liquid crystals. There are, for example, mineral oil and synthetic lubricating oil. More concretely, there are oils such as paraffin type mineral oil, naphthene type mineral oil, poly-$\alpha$-olefines, polyalkylene glycols, silicones, diesters, polyol esters, phosphoric acid esters, silicon compounds, fluorine compounds, polyphenyl ethers, synthetic hydrocarbons etc. The viscosity range of these electrically insulating fluids is is preferably 5 to 300 cSt at 40°C.

Solid particles are used as dispersoid, and porous solid particles such as silica gel, moisture-containing resin, diatomaceous earth, alumina, silica-alumina, zeolite ion exchange resin, cellulose, etc. may be used. Also, liquid crystal polymers may be used as dispersoid. These solid particles are preferably 10 nm to 200 $\mu$m in particle size and are

used by 0.1 to 50 weight %. If it is less than 0.1 weight %, electroviscous effect is too low. If it exceeds 50 weight %, dispersion property is too low.

To disperse the solid particles in the electrically insulating fluid in uniform and stable manner, a dispersing agent may be added. Dispersing agents commonly used are normally adopted. For example, sulfonates, phenates, phosphonates, succinimides, amines or non-ionic dispersing agents are used. More concretely, there are magnesium sulfonate, calcium sulfonate, calcium phosphonate, polybutenyl succinimide, sorbitan monooleate, sorbitan sesquioleate, etc. These are normally used by 0.1 to 10 weight % and may not be used if dispersion property of solid particle is high.

The liquid crystal substance in the dispersion medium of the present invention has a polarizing effect under the presence of an electric field, and a polyhydric alcohol may be added when necessary. As the polyhydric alcohol, dihydric alcohols and trihydric alcohols are preferable, and ethylene glycol, diethylene glycol, triethylene glycol, tetraethylene glycol, polyethylene glycol, glycerine, propanediol, butanediol, pentanediol, hexanediol, etc. may be used.

Partial derivatives of polyhydric alcohols may also be used. As such derivatives, there are partial derivatives of polyhydric alcohols having at least one hydroxyl group, partial ethers, in which some of terminal hydroxyl groups of the above polyhydric alcohol are substituted by methyl groups, ethyl groups, propyl groups, alkyl-substituted phenyl groups (the number of carbons of the alkyl group substituted with the phenyl group is 1 to 25.), or partial esters, in which some of terminal hydroxyl groups are esterized by acetic acid, propionic acid, butyric acid, etc.

It is preferable to use such polyhydric alcohol or its partial derivative by 1 to 100 weight %, or more preferably by 2 to 80 weight %. If the added quantity is 1 weight % or less, ER effect is low. If it exceeds 100 weight %, it is not desirable because electric current easily flows. It is needless to say that water may be used together with the polyhydric alcohol in such degree as not to hinder ER effect.

Further, acids, salts or basic components may be added as necessary. As such acid components, inorganic acids such as sulfuric acid, hydrochloric acid, nitric acid, perchloric acid, chromic acid, phosphoric acid, boric acid, etc. or organic acids such as acetic acid, formic acid, propionic acid, butyric acid, isobutyric acid, valerianic acid, oxalic acid, malonic acid, etc. may be used.

As salts, compounds comprising metals or basic radicals (such as $NH_4^+$, $N_2H_5^+$) and acid radicals can be used. Above all, it is preferable to use a compound, which is dissolved and dissociated in a system of polyhydric alcohol or partial derivative of polyhydric alcohol, e.g. a compound to form a typical ionic crystal such as a halide of an alkali metal or alkali earth metal, or an alkali metal salt of a organic acid. As the salt of this type, there are LiCl, NaCl, KCl, $MgCl_2$, $CaCl_2$, $BaCl_2$, LiBr, NaBr, KBr, $MgBr_2$, LiI, NaI, KI, $AgNO_3$, $Ca(NO_3)_2$, $NaNO_2$, $NH_4NO_3$, $K_2SO_4$, $Na_2SO_4$, $NaHSO_4$, $(NH_4)_2SO_4$, or metal salts of acids such as formic acid, acetic acid, oxalic acid, succinic acid, etc.

As a base, hydroxides of alkali metals or alkali earth metals, carbonates of alkali metals, amines, etc. are used, and it is preferable to use a compound, which is dissolved and dissociated in a polyhydric alcohol, partial derivative of polyhydric alcohol or in a system of polyhydric alcohol and/or partial derivative of polyhydric alcohol and water. As the base of this type, there are NaOH, KOH, $Ca(OH)_2$, $Na_2CO_3$, $NaHCO_3$, $K_3PO_4$, $Na_3PO_4$, aniline, alkylamine, ethanolamine, etc., and the salt and the base as described above may be used together.

Acid, salt and base are to increase the polarizing effect. When used in combination with the polyhydric alcohol and/or partial derivative of polyhydric alcohol, the polarizing effect can be increased more, and these substances may be used by 0.01 to 5 weight % to the entire electroviscous fluid. If it is less than 0.01 weight %, ER effect is too low. If it exceeds 5 weight %, it is not desirable because electric current easily flows and power consumption increases. When acid, salt or base component is added to the electroviscous fluid of the present invention, it is necessary that the partially esterified compound of the polyhydric alkohol is not hydrolyzed.

It is preferable to add an antioxidant and corrosion inhibitor to the electroviscous fluid of the present invention.

As the antioxidant, a phenol type or amine type antioxidant commonly used may be used. More concretely, a phenol type antioxidant, such as 2,6-di-t-butylparacresol, 4,4'-methylene-bis-(2,6-di-t-butylphenol), 2,6-di-t-butylphenol, or an amine type antioxidant, such as dioctyl-diphenolamine, phenyl-$\alpha$-naphthylamine, alkyldiphenylamine, N-nitrosodiphenylamine, etc. may be used. Such substances can be added to the electroviscous fluid by 0.01 to 10 weight %, or more preferably by 0.1 to 2.0 weight %. If it is less than 0.01 weight %, there is no antioxidation effect. If it exceeds 10 weight %, problems arise such as hue change, generation of turbidity or sludge, increase of consistency, etc.

As corrosion inhibitor, a nitrogen compound such as benzotriazole and its derivative, imidazoline, pyrimidine derivative, etc. and a compound containing sulfur and nitrogen such as 1,3,4-thiadiazole polysulfide, 1,3,4-thiadiazoril-2,5-bisdialkyldithiocarbamate, 2-(alkyldithio)-benzoimidazole, etc., or $\beta$-(o-carboxybenzylthio)propionnitrile or propionic acid may be used. Such substance is used by 0.001 to 10 weight %, or more preferably by 0.01 to 1.0 weight %, to the entire electroviscous fluid. If it is less than 0.001 weight %, there is no corrosion inhibitive effect. If it exceeds 10 weight %, problems arise such as hue change, generation of turbidity or sludge, increase of consistency, etc.

Further, anti-friction anti-wear agents commonly used such as dibenzyl sulfide, dibutyl sulfide, chlorinated paraffin, chlorinated diphenyl, etc. may be added, or a extreme pressure agent, defoaming agent, etc. may be added.

In the following, description will be given on several examples of electroviscous fluids:

[Example 1]

A mixture of liquid crystal substances given by the following structural formulae and contents, being in liquid state at normal temperature [viscosity 50 cP (20°C)] was used as an electroviscous fluid.

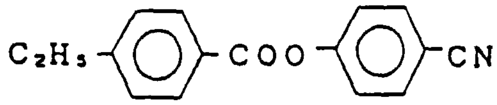

5 wt %

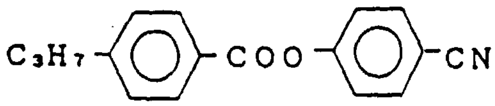

5 wt %

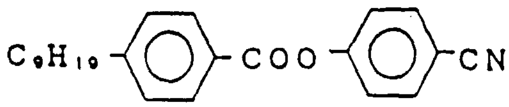

5 wt %

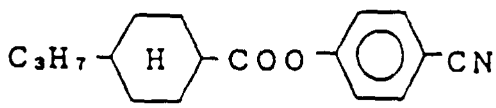

5 wt %

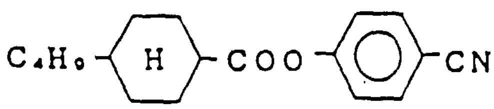

5 wt %

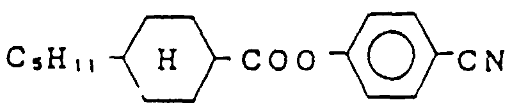

5 wt %

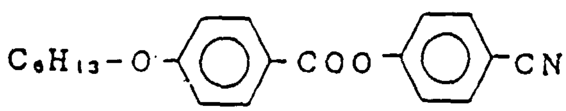

5 wt %

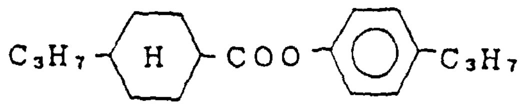 7 wt %

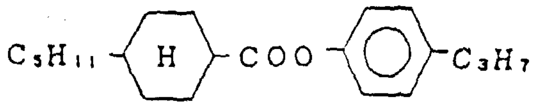 7 wt %

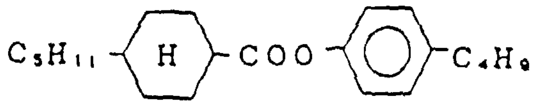 7 wt %

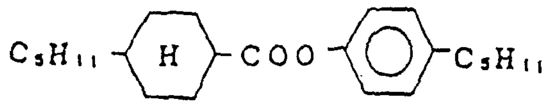 7 wt %

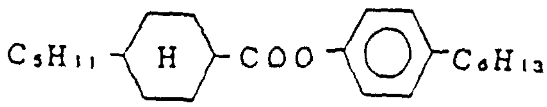 7 wt %

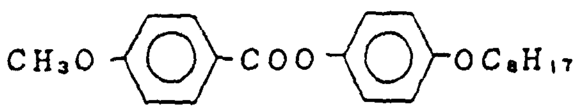 3 wt %

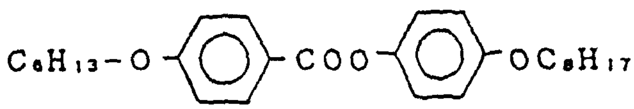 3 wt %

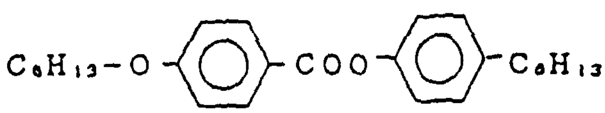 3 wt %

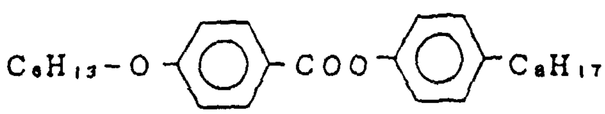 3 wt %

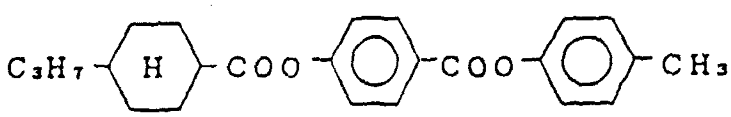 3 wt %

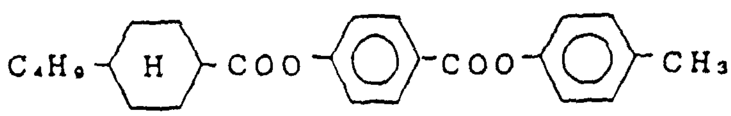 3 wt %

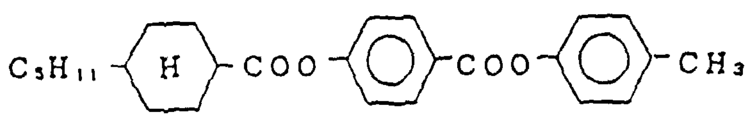 3 wt %

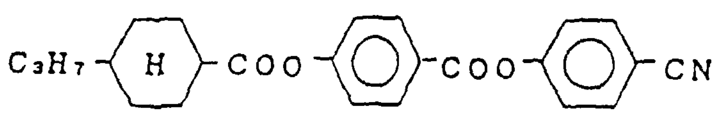 3 wt %

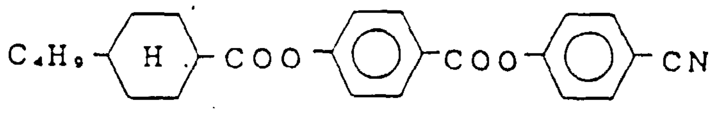

3 wt %

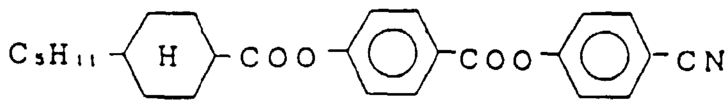

3 wt %

[Example 2]

A mixture of liquid crystal substances given by the following structural formulae and contents, being in liquid state at normal temperature [viscosity 56 cP (20°C)], was used as an electroviscous fluid.

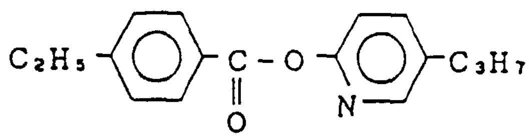

10 wt %

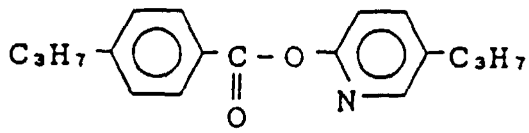

15 wt %

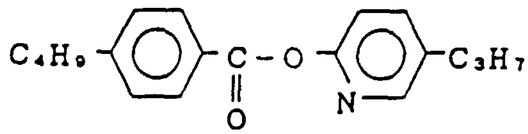

15 wt %

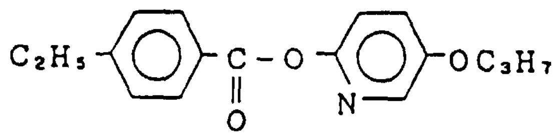

10 wt %

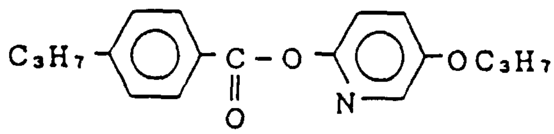

10 wt %

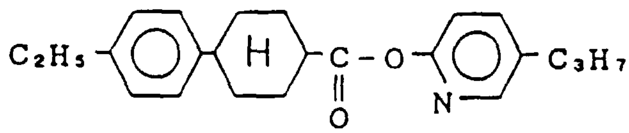

10 wt %

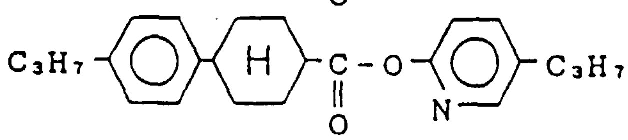

10 wt %

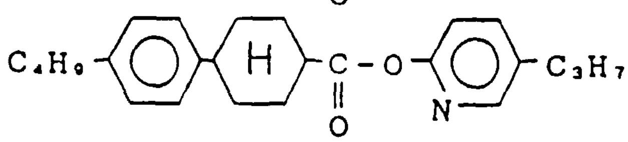

10 wt %

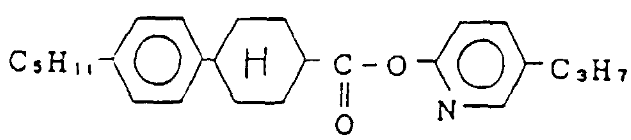

10 wt %

[Example 3]

A mixture of liquid crystal substances given by the following structural formulae and contents, being in liquid state

at normal temperature [viscosity 40 cP (20°C)], was used as an electroviscous fluid.

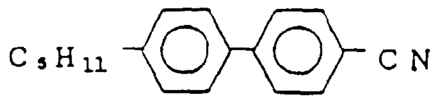

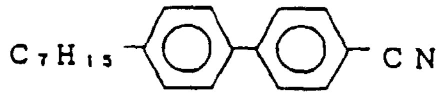

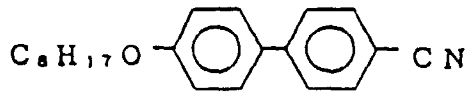

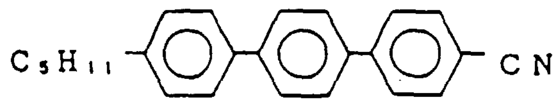

The contents are 51 wt %, 25 wt %, 16 wt % and 8 wt % in this order from above.

[Comparative example 1]

4'-methoxybenzylidene-4-n-butylaniline having azomethine bonding was used as electroviscous fluid.

[Comparative example 2]

A liquid crystal substance [trade name: ROTN 200, manufactured by Roche; viscosity 84 cP (20°C)] containing 4'-propylbenzylidene-4-cyanoaniline by 33 weight %, 4'-hexylbenzylidene-4-cyanoaniline by 67 weight % was used as electroviscous fluid.

[Comparative example 3]

Monochlorobenzene, a polar substance, was used as electroviscous fluid.

Each of the electroviscous fluids given above was used immediately after opening the sample and also after leaving it in the atmospheric air for 10 days. Using a voltage-applicable rotational viscometer, thickening effect was determined at 40°C to evaluate as electroviscous fluid.

Thickening effect was compared by ratio of viscosity at AC electric field of $2.0 \times 10^6$ (V/m) to viscosity at electric field of 0 (V/m) when shear rate was 600 $sec.^{-1}$.

The results are given in Table 1.

Table 1

| | Thickening effect | |
|---|---|---|
| | Immediately after opening sample | After leaving in the air for 10 days |
| Example 1 | 3.9 | 3.9 |
| Example 2 | 4.5 | 4.5 |
| Example 3 | 5.1 | 5.0 |
| Comparative example 1 | 2.0 | 1.5 |
| Comparative example 2 | 3.1 | 2.3 |
| Comparative example 3 | 1.1 | 1.1 |

It is evident that each of the electroviscous fluids of the present invention is more stable when brought into contact with atmospheric air and has higher thickening effect than the comparative examples.

[Example 4]

An electroviscous fluid was prepared, which contains nematic liquid crystals [trade name: NEM 133 (N), manufactured by Fuji Pigment Co.; viscosity 50 cP (20°C)] by 99.7 weight % and 2,6-di-t-butylphenol by 0.3 weight %.

[Example 5]

An electroviscous fluid was prepared, which contains nematic liquid crystals [trade name: NEM 133 (N), manufactured by Fuji Pigment Co.; viscosity 50 cP (20°C)] by 99.9 weight % and a benzotriazole derivative as metal corrosion inhibitor by 0.1 weight %.

[Example 6]

An electroviscous fluid was prepared, which contains, nematic liquid crystals [trade name: REM 133 (N), manufactured by Fuji Pigment Co.; viscosity 50 cP (20°C)] by 99.6 weight %, 2,6-di-t-butylphenol by 0.3 weight %, and a benzotriazole derivative by 0.1 weight %.

[Example 7]

An electroviscous fluid was prepared, which contains nematic liquid crystals [trade name: NEM 133 (N), manufactured by Fuji Pigment Co.; viscosity 50 cP (20°C)] by 99.6 weight %, dioctyldiphenylamine by 0.3 weight %, and a benzotriazole derivative by 0.1 weight %.

[Example 8]

Nematic liquid crystals [trade name: NEM 133 (N), manufactured by Fuji Pigment Co.; viscosity 50 cP (20°C)] were used as electroviscous fluid.

On each of the above samples, thickening effect and durability were determined at 40°C using a voltage-applicable rotational viscometer to evaluate as electroviscous fluid.

Thickening effect was compared by ratio of viscosity at AC electric field of $2.0 \times 10^6$ (V/m) to viscosity at electric field of 0 (V/m) when shear rate was 600 $sec.^{-1}$.

Durability is expressed by the ratio of viscosity coefficient at 12 hours after measurement to initial viscosity coefficient. The results are summarized in Table 2.

Electric current value is the value measured under the above conditions.

Table 2

| | Thickening effect (×) | Durability (%) | Current value ($\mu A/cm^2$) |
|---|---|---|---|
| Example 4 | 3.9 | 100 | 1.8 |
| Example 5 | 3.9 | 100 | 0.5 |
| Example 6 | 3.9 | 97 | 0.3 |
| Example 7 | 3.9 | 100 | 0.5 |
| Example 8 | 3.9 | 95 | 2.0 |

It is evident from the table that each of the electroviscous fluids of Examples 4 - 7 has higher durability and requires less electric current compared with Example 8, which contains only nematic liquid crystals.

[Example 9]

Nematic liquid crystals [trade name: RDX-4069, manufactured by Rodick; $\Delta \varepsilon = 20.0$; viscosity 56 cP (20°C)] were used as electroviscous fluid.

[Example 10]

Nematic liquid crystals [trade name: DOX-2058, manufactured by Rodick; Δ ε = 14.6, viscosity 53.7 cP (20°C)] were used as electroviscous fluid.

[Example 11]

Nematic liquid crystals [trade name: DOX-7005, manufactured by Rodick; Δ ε =6.3, viscosity 23.2 cP (20°C)] were used as electroviscous fluid.

[Example 12]

Nematic liquid crystals 4'-methoxybenzylidene-4-n-butylaniline (MBBA, Δ ε = -0.7, viscosity 35 cP (20°C)) were used as electroviscous fluid.

[Example 13]

A liquid crystal mixture containing nematic liquid crystals having the following structural formulae [Δ ε = -1.3, viscosity 18 cP (20°C)] was used as electroviscous fluid:

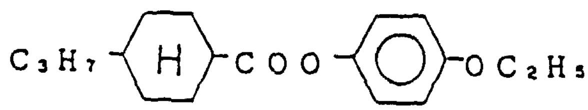

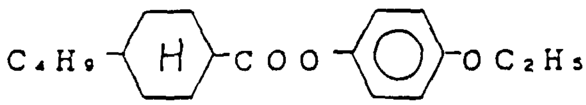

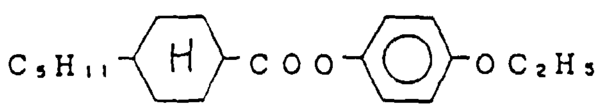

On each of the above samples, thickening effect was determined at 40°C using a voltage-applicable rotational viscometer to evaluate as electroviscous fluid.

Thickening effect was compared by ratio of viscosity at AC electric field of $2.0 \times 10^6$ (V/m) to viscosity at electric field of 0 (V/m) when shear rate was 600 $sec.^{-1}$. The results are given in Table 3.

Table 3

| | Thickening effect (×) |
|---|---|
| Example 8 | 3.9 |
| Example 9 | 4.5 |
| Example 10 | 5.5 |
| Example 11 | 4.8 |
| Example 12 | 2.0 |
| Example 13 | 1.8 |

It is evident that each of the electroviscous fluids of Examples 8 - 11 has higher thickening effect than Examples 12 and 13.

[Example 14]

Ferroelectric liquid crystals (2S,3S)-3-methyl-2-chloropentanoic acid 4',4''-octyloxybiphenyl ester (magnitude of spontaneous polarization: $1.8 \times 10^{-7}$ C/cm$^2$) were used as electroviscous fluid.

[Example 15]

To nematic liquid crystals [trade name: NEM 133 (N), manufactured by Fuji Pigment Co.; viscosity 50 cP (20°C)], ferroelectric liquid crystals (2S,3S)-3-methyl-2-chloropentanoic acid 4', 4"-octyloxybiphenyl ester (magnitude of spontaneous polarization: $1.8 \times 10^{-7}$ C/cm$^2$, 40°C) were added by 20 weight % to prepare an electroviscous fluid.

On each of the above samples, thickening effect was determined at 50°C using a voltage-applicable rotational viscometer. Thickening effect was compared by ratio of viscosity at AC electric field of $2.0 \times 10^6$ (V/m) to viscosity at electric field of 0 (V/m) when shear rate was 600 sec.$^{-1}$.

To measure responsiveness of each sample, a measuring apparatus was prepared, which comprises a piston and a cylinder having a flow passage of electroviscous fluid and in which voltage is applicable between the piston and the cylinder. After each sample was filled in the cylinder, the piston was dropped by its own weight at 50°C while the electric field was being turned on and off, and the response time (msec) was measured. The results are shown in Table 4.

Table 4

| | Thickening effect (×) | Response time (msec) |
|---|---|---|
| Example 8 | 3.9 | 25 |
| Example 14 | 4.5 | 0.1 |
| Example 15 | 4.5 | 0.5 |

It is evident that each of the electroviscous fluids of Examples 14 and 15 has higher thickening effect and responsiveness than Example 8, which contains only nematic liquid crystal.

[Example 16]

An electroviscous fluid [viscosity 42 cSt (40°C)] having the following composition was prepared:

| | | |
|---|---|---|
| (1) | Nematic liquid crystals (manufactured by Fuji Pigment Co.) (viscosity 21 cSt (40°C)) | 85.0 weight parts |
| (2) | Silica gel | 6.0 weight parts |
| (3) | Triethylene glycol | 2.0 weight parts |
| (4) | Alkenyl succimide (trade name: ASA-168P-TEPA; manufactured by Toho Chemical Co.) | 7.0 weight parts |

[Example 17]

An electroviscous fluid [viscosity 46 cSt (40°C)] having the following composition was prepared:

| | | |
|---|---|---|
| (1) | Alkylbenzene (viscosity 25 cSt) | 44.7 weight parts |
| (2) | Nematic liquid crystals (manufactured by Fuji Pigment Co.; viscosity 21 cSt (40 °C)) | 40.0 weight parts |
| (3) | Silica gel | 6.0 weight parts |
| (4) | Triethylene glycol | 2.0 weight parts |
| (5) | Polyisobutenyl succimide (trade name: ECA4360J; manufactured by Exxon Chemical Co.) | 7.0 weight parts |
| (6) | 2,6-di-t-butylphenol (trade name Ethyl 703; manufactured by Ethyl Corporation) | 0.3 weight parts |

[Comparative example 4]

An electroviscous fluid [viscosity 40 cSt (40°C)] having the following composition was prepared:

(1) Alkylbenzene (viscosity 25 cSt) .................................. 84.7 weight parts

(2) Silica gel ...................... 6.0 weight parts

(3) Triethylene glycol ............... 2.0 weight parts

(4) Polyisobutenyl succimide (trade name: ECA4360J; manufactured by Exxon Chemical Co.) .................... 7.0 weight parts

(5) 2,6-di-t-butylphenol (trade name Ethyl 703; manufactured by Ethyl Corporation) ..................... 0.3 weight parts

[Example 18]

Nematic liquid crystals [viscosity 21 cSt (40°C)] (manufactured by Fuji Pigment Co.) were used alone as electroviscous fluid.

On each of the electroviscous fluids prepared above, thickening effect was determined at 0°C and 40°C using a voltage-applicable rotational viscometer to evaluate as electroviscous fluid.

Thickening effect was evaluated by ratio of viscosity at AC electric field of $2.0 \times 10^6$ (V/m) to viscosity at electric field of 0 (V/m).

The results are shown in Table 5.

Table 5

| | | Thickening effect (×) |
|---|---|---|
| Example 16 | 0°C | 4.6 |
| | 40°C | 8.5 |
| Example 17 | 0°C | 3.3 |
| | 40°C | 6.1 |
| Comparative example 4 | 0°C | 1.2 |
| | 40°C | 3.8 |
| Example 18 | 0°C | 3.0 |
| | 40°C | 3.9 |

It is evident that each of the electroviscous fluids of Examples 16 and 17 have higher thickening effect at low temperature than comparative example 4 and higher thickening effect at high temperature than Example 18.

The substances according to the present invention are useful as electroviscous fluids to be used for electric control of vibration control machines and devices such as variable dampers, engine mounts, bearing dampers, clutches, valves, shock absorbers, precision machines, acoustic machines etc. or for display elements.

**Claims**

1. An electroviscous fluid, comprising

   ferroelectric liquid crystals that have a spontaneous polarization of $3x10^{-9}$ $C/cm^2$ or more, with the proviso that the compound forming the ferroelectric liquid crystals does not have an azomethine bonding,
   and 0.01 to 10 weight % of an antioxidant and/or 0.001 to 10 weight % of a metal corrosion inhibitor.

2. An electroviscous fluid according to claim 1,
   further comprising solid particles as dispersoid and an electrically insulating fluid which contains the ferroelectric liquid crystals.

3. An electroviscous fluid according to claim 2 , comprising 0.1 to 50 weight % solid particles.

**Patentansprüche**

1. Elektroviskose Flüssigkeit, umfassend

   ferroelektrische Flüssigkristalle mit einer spontanen Polarisation von 3 x $10^{-9}$ $C/cm^2$ oder mehr, mit der Maßgabe, daß die Verbindung, welche die ferroelektrischen Flüssigkristalle bildet, keine Azomethinbindung aufweist, und
   0,01 bis 10 Gew.-% eines Antioxidans und/oder 0,001 bis 10 Gew.-% eines Metallkorrosionsinhibitors.

2. Elektroviskose Flüssigkeit nach Anspruch 1, ferner umfassend Feststoffteilchen als Dispersoid und eine die ferroelektrischen Flüssigkristalle enthaltende, elektrisch isolierende Flüssigkeit.

3. Elektroviskose Flüssigkeit nach Anspruch 2, umfassend 0,1 bis 50 Gew.-% Feststoffteilchen.

**Revendications**

1. Fluide électrovisqueux, comprenant:
   des cristaux liquides ferroélectriques ayant une polarisation spontanée de $3x10^{-9}$ $C/cm^2$ ou plus, à condition que le composé formant les cristaux liquides ferroélectriques n'ait pas de liaison azométhine, et 0,01 à 10% en poids d'un antioxydant et/ou 0,001 à 10% en poids d'un inhibiteur de la corrosion du métal.

2. Fluide électrovisqueux selon la revendication 1, comprenant aussi des particules solides comme dispersoïde et un fluide isolant électrique qui contient les cristaux liquides ferroélectriques.

3. Fluide électrovisqueux selon la revendication 2, comprenant 0,1 à 50% en poids de particules solides.